# EUROPÄISCHE PATENTSCHRIFT

(11) **EP 1 867 431 B1**
(45) Veröffentlichungstag und Bekanntmachung des Hinweises auf die Patenterteilung: **02.09.2009**
(21) Anmeldenummer: 06012224.9
(22) Anmeldetag: 14.06.2006
(51) Int. Cl.: B24B 41/04, B23H 5/06

(54) **Spindel mit Zugstange und Stromleiter**
Spindle with a conductive positive lock drawbar
Broche avec tige de serrage à blocage positif conductive

(43) Veröffentlichungstag der Anmeldung: 19.12.2007
(73) Patentinhaber: Paul Müller GmbH & Co. KG Unternehmensbeteiligungen, 90411 Nürnberg (DE)
(72) Erfinder: Möller, Bernd Dr., 91217 Herbruck (DE)
(74) Vertreter: Lösch, Christoph Ludwig Klaus

(56) Entgegenhaltungen:
- DE-A1- 3 312 604
- DE-A1- 3 826 277
- DE-C1- 10 221 430

## Beschreibung

Die Erfindung betrifft eine Spindel für eine Werkzeugmaschine mit den Merkmalen des Oberbegriffs des Patentanspruchs 1.

Aus der DE 102 21 430 C1 ist eine Spindelanordnung für drehantreibbare, elektrisch anschließbare Werkzeuge z.B. zum Schleifen oder elektroerosiven Bearbeiten bekannt, wobei eine Spindelhülse und ein elektrisch davon isolierter Spindelkern vorhanden sind. Eine Einrichtung zum automatisierten Werkzeugwechsel ist dabei nicht vorgesehen.

Der Erfindung liegt die Aufgabe zugrunde, eine Spindel für eine Werkzeugmaschine für drehantreibbare, elektrisch anschließbare Werkzeuge anzubieten, bei der ein automatisierten Werkzeugwechsel ermöglicht wird.

Diese Aufgabe wird durch eine Spindel mit den Merkmalen des kennzeichnenden teils des Patentanspruchs 1 in Verbindung mit den Merkmalen des Oberbegriffs des Patentanspruchs 1 gelöst.

Vorteilhafte Ausführungsformen werden in den Unteransprüchen 2 - 6 beschrieben.

Die erfindungsgemäße Spindel weist eine Zugstange zur Betätigung der automatischen Werkzeugaufnahme der Spindel auf, wobei die Zugstange ferner einen Stromleiter zur Stromversorgung des aufgenommenen Werkzeugs besitzt. In die Zugstange zur Betätigung der automatischen Werkzeugaufnahme ist damit ein Stromleiter aufgenommen bzw. daran angebracht. Die Zugstange dient somit als Träger oder Befestigungsbasis für den verwendeten Stromleiter.

Nach einer vorteilhaften Ausführungsform ist die Zugstange dabei als Hohlwelle mit einem Hohlraum ausgebildet, wobei der Stromleiter insbesondere im Hohlraum der Hohlwelle aufgenommen oder angebracht ist. Der Hohlraum der Zugstange kann dabei einerseits zur Aufnahme des Stromleiters und andererseits zur Zuführung von Kühlmittel verwendet werden.

Vorteilhafterweise besitzt die Zugstange dabei einen ersten Endbereich, der durch ein Übertragungselement mit Strom zur Stromversorgung des Stromleiters versorgt wird. Über diesen Endbereich kann somit der Stromleiter innerhalb oder an der Zugstange mit Strom versorgt werden.

Vorteilhafterweise ist dabei der erste Endbereich der Spindel gegenüber der Zugstange axial verschiebbar. Bei unterschiedlichen Positionen der Zugstange, z.B. bei der Werkzeughalterung oder bei der Freigabe des Werkzeugs, kann somit die Zugstange gegenüber dem Endbereich der Spindel unterschiedliche Axialpositionen einnehmen.

Nach einer weiteren vorteilhaften Ausführungsform besitzt die Zugstange einen zweiten Endbereich, der gegenüber einem Sockelbereich des aufgenommenen Werkzeugs isoliert ist. Hierdurch wird vermieden, daß der Sockelbereich des Werkzeug unerwünscht mit Strom versorgt wird.

Die erfindungsgemäße Spindel ist anhand von Ausführungsbeispielen in den Zeichnungsfiguren näher erläutert. Es zeigen:
- Fig. 1: eine Schnittdarstellung durch eine Spindel, wobei in einem ersten oberen Teilschnitt die Zugstange in herausgefahrener Position und in einem unteren Teilschnitt die Zugstange mit eingefahrener Position abgebildet ist,
- Fig. 2: eine vergrößerte Darstellung eines ersten Endbereichs der Spindel nach Fig. 1,
- Fig. 3: eine vergrößerte Darstellung eines zweiten Endbereichs der Spindel nach Fig. 1,
- Fig.4: eine Ansicht A von Fig. 3 einer ersten Ausführungsform der Zugstange sowie
- Fig. 5: eine Ansicht A von Fig. 3 einer weiteren Ausführungsform der Zugstange.

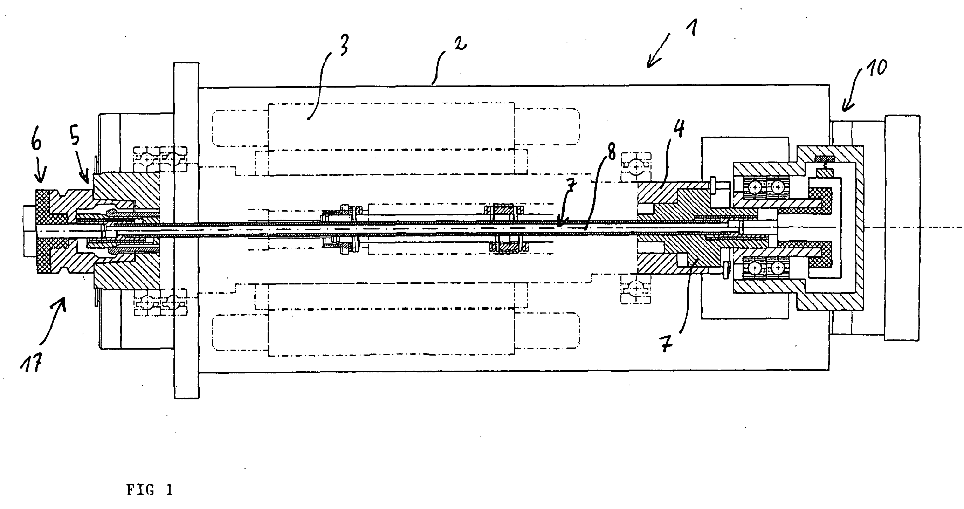

Fig. 1 zeigt eine Spindel 1 mit einem Gehäuse 2 und einem darin aufgenommenen Elektromotor 3 zum Antrieb einer Welle 4. Ferner ist eine Werkzeugaufnahme 5 vorgesehen, in welche wie abgebildet ein Werkzeug 6, insbesondere ein elektrisch anschließbares Werkzeug 6, aufgenommen ist. In der Spindel 1 befindet sich eine Zugstange 7 zum automatischen Werkzeugwechsel, welche einen Stromleiter 8 zur Stromversorgung des Werkzeugs 6 aufweist.

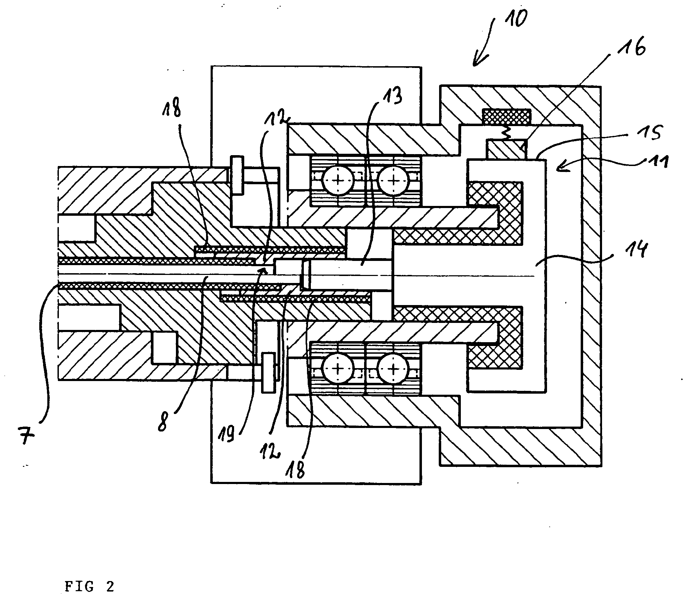

Fig. 2 zeigt einen ersten Endbereich 10 in vergrößerter Darstellung gemäß der Spindel 1 nach Fig. 1.

Aus Fig. 2 geht - ebenso wie in Fig. 1 - in einer ersten Teilschnittdarstellung oberhalb der Mittellinie eine Position der Zugstange 7 im ausgefahrenen Zustand hervor, wobei dann das Werkzeug 6 aus der Werkzeugaufnahme 5 entnommen werden kann.

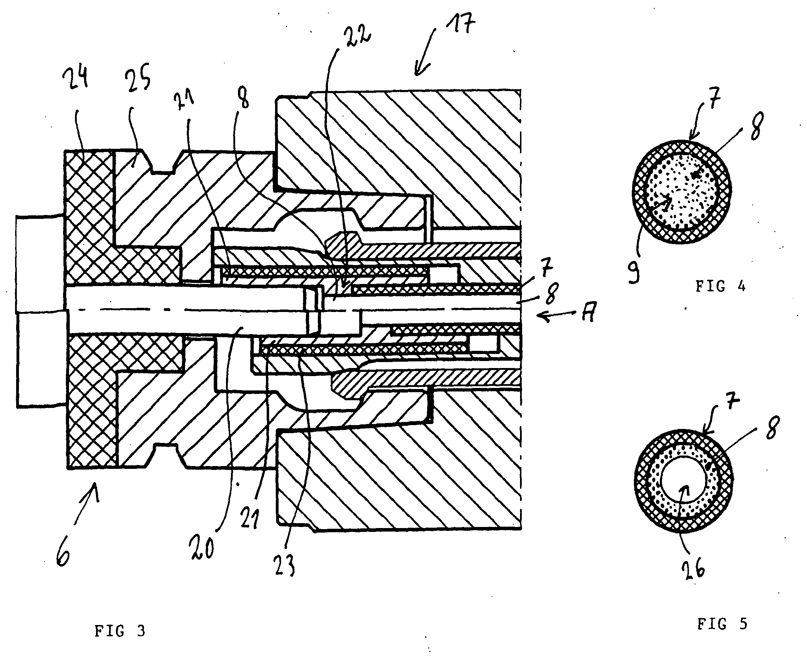

Unterhalb der Mittellinie ist die Zugstange 7 in einer zurückgefahrenen Position gezeigt, bei der gemäß Darstellung im zweiten Endbereich 17 nach Fig. 1 und Fig. 3 das Werkzeug 6 in aufgenommener und arretierter Position erfaßt wird.

Die Zugstange 7 ist aus einem isolierenden Material ausgebildet oder damit beschichtet und besitzt ein leitendes Element 12, in welches ein Stift 13 eines des ersten Endteils 14 eingreift. In das erste Endteil 14 eingeleiteter Strom wird über den Stift 13 und das leitende Element 12 in den Stromleiter 8 eingeleitet. Dort wird der Strom über die gesamte Länge der Zugstange 7 in den zweiten Endbereich 17 fortgeführt und kann dort dem aufgenommenen elektrisch anschließbaren Werkzeug 6 zugeführt werden.

Dabei kontaktiert der Stromleiter 8 zur Stromübertragung das leitende Element 12 mit seinem Abschnitt 19 und kann dabei mit dem leitenden Element 12 fest verbunden sein (z.B. durch Lötverbindung).

Das erste Endteil 14 besitzt ein Übertragungselement 11 mit einem Außenbereich 15, der über ein Bürstenelement 16 kontaktierbar ist und auch bei Rotation des ersten Endteils 14 gegenüber dem stationären Bürstenelement 16 eine Stromübertragung von in das Bürstenelement 16 eingeleitetem Strom in das erste Endteil 14 ermöglicht. Die Zugstange 7 besitzt ein Isolationsteil 18 zur Isolation der Zugstange 7 gegenüber dem leitenden Element 12.

Das Bürstenelement 16 kann beim Betrieb ohne Stromübertragung abgehoben werden, so daß in diesem Fall keine Einschränkung der Spindeldrehzahl durch die max. Umfangsgeschwindigkeit am Bürstenelement 16 zu beachten ist (z.B. für hohe Drehzahlen beim Schleifen)

Außerdem kann hierdurch eine galvanische Trennung innerhalb der Spindel erreicht werden, so daß z.B. auch ein gefahrloser Werkzeugwechsel von Hand möglich ist.

Das Abheben des Bürstenelement 16 kann durch durch eine nicht abgebildete Abhebevorrichtung (z.B. elektromagnetisch, hydraulisch, pneumatisch oder durch Hand) erfolgen.

Aus Sicherheitsgründen vorteilhaft ist eine Lösung, bei das Bürstenelement 16 im nicht-betätigten Zustand der Abhebevorrichtung z.B. durch nicht abgebildete weitere Federelemente vom Außenbereich 15 abgehoben ist.

Eine weitere Stromübertragung auf das Werkzeug findet im zweiten Endbereich 17 zwischen dem Stift 20 und einem weiteren leitenden Element 21 und den Stromleiter 8 statt. Dabei kontaktiert der Stromleiter 8 zur Stromübertragung das weitere leitende Element 21 mit einem weiteren Abschnitt 22 und kann dabei mit dem weiteren leitenden Element 21 ebenfalls fest verbunden sein (z.B. durch Lötverbindung). Die Zugstange 7 besitzt ein weiteres Isolationsteil 23 zur Isolation der Zugstange 7 gegenüber dem weiteren leitenden Element 21.

Der Strom aus dem Stromleiter 8 wird damit in den Stift 20 des Werkzeugs 6 z.B. zum Schleifen oder elektroerosiven Bearbeiten eingeleitet.

Dabei ist der Stift 20 ist wiederum durch eine Isolation 22 vom stromfreien Sockelbereich 25 des Werkzeugs 6 elektrisch getrennt.

In Ansicht A nach Fig. 4 ist eine Zugstange 7 gezeigt, die im inneren Hohlraum den Stromleiter 8 aufweist, der z.B. als Stange oder Rohr (z.B. aus Kupfer) ausgebildet ist.

Nach einer vorteilhaften Ausführungsform der Zugstange 7 nach Fig. 5 ist der Stromleiter 8 als Rohr ausgebildet und besitzt Inneren einen weiteren Hohlbereich 26, der z.B. zur Zuführung von Kühlmittel für die Werkstückbearbeitung verwendet werden kann.

Bei einer derartigen Ausführungsform kann die erfindungsgemäße Spindel 1 zum einen bei Verwendung mit elektrisch anschließbarem Werkzeug 6 ohne Kühlmittelzufuhr verwendet werden und zum anderen ggf. bei Stromabschaltung mit Zufuhr von Kühlmittel durch den weiteren Hohlbereich 26 der Zugstange 7 auch z.B. zum Drehen und Fräsen ohne elektrisch anschließbare Werkzeuge mit üblichen Schneid - oder Schleifwerkzeugen verwendet werden.

### BEZUGSZEICHEN

- 1: Spindel
- 2: Gehäuse
- 3: Elektromotor
- 4: Welle
- 5: Werkzeugaufnahme
- 6: Werkzeug
- 7: Zugstange
- 8: Stromleiter
- 9: Hohlraum
- 10: erster Endbereich
- 11: Übertragungselement
- 12: leitendes Element
- 13: Stift
- 14: Endteil
- 15: Außenbereich
- 16: Bürstenelement
- 17: zweiter Endbereich
- 18: Isolationsteil
- 19: Abschnitt
- 20: Stift
- 21: weiteres leitendes Element
- 22: weiterer Abschnitt
- 23: weiteres Isolationsteil
- 24: Isolation
- 25: Sockelbereich
- 26: Hohlbereich

## Patentansprüche

1. Spindel (1) für eine Werkzeugmaschine, insbesondere Motorspindel, mit einem Gehäuse (2) zur Aufnahme eines Elektromotors (3) und einer von diesem antreibbaren Welle (4) und mit Werkzeugaufnahme (5) für ein elektrisch anschließbares Werkzeug (6), wobei eine Zugstange (7) zur Betätigung der Werkzeugaufnahme (5) der Spindel (1) vorgesehen ist,
**dadurch gekennzeichnet, daß** die Zugstange (7) einen Stromleiter (8) zur Stromversorgung eines aufgenommenen Werkzeugs (6) aufweist.

2. Spindel nach Anspruch 1, wobei die Zugstange (7) als Hohlwelle mit einem Hohlraum (9) ausgebildet ist.

3. Spindel nach Anspruch 2, wobei der Stromleiter (8) in dem Hohlraum (9) aufgenommen ist.

4. Spindel nach einem der vorhergehenden Ansprüche, wobei die Zugstange (7) einen ersten Endbereich (10) aufweist, der durch ein Übertragungselement (11) mit Strom zur Stromversorgung des Stromleiters (8) versorgt wird.

5. Spindel nach Anspruch 4, wobei der erste Endbereich (10) der Spindel (1) und die Zugstange (7) zueinander axial verschiebbar sind.

6. Spindel nach einem der vorhergehenden Ansprüche, wobei die Zugstange (7) einen zweiten Endbereich (17) aufweist, der gegenüber einem Sockelbereich (18) des aufgenommenen Werkzeugs (6) isoliert ist.

## Claims

1. Spindle (1) for a machine tool, in particular a motor spindle, having a housing (2) for accommodating an electric motor (3) and a shaft (4) which can be driven by the latter, and having a tool holder (5) for an electrically connectable tool (6), wherein a draw rod (7) is provided for actuating the tool holder (5) of the spindle (1), **characterized in that** the draw rod (7) has a current conductor (8) for supplying current to an accommodated tool (6).

2. Spindle according to Claim 1, wherein the draw rod (7) is designed as a hollow shaft having a cavity (9).

3. Spindle according to Claim 2, wherein the current conductor (8) is accommodated in the cavity (9).

4. Spindle according to one of the preceding claims, wherein the draw rod (7) has a first end region (10) which is supplied with current by a transfer element (11) for supplying current to the current conductor (8).

5. Spindle according to Claim 4, wherein the first end region (10) of the spindle (1) and the draw rod (7) are axially displaceable relative to one another.

6. Spindle according to one of the preceding claims, wherein the draw rod (7) has a second end region (17) which is insulated from a base region (25) of the accommodated tool (6).

## Revendications

1. Broche (1) pour machine-outil, en particulier broche motorisée, qui présente un boîtier (2) de réception d'un moteur électrique (3) et un arbre (4) entraîné par ce dernier, ainsi qu'un logement d'outil (5) pour un outil (6) qui peut être raccordé électriquement, une tige de traction (7) étant prévue pour actionner le logement d'outil (5) de la broche (1),
**caractérisée en ce que**
la tige de traction (7) présente un conducteur de courant (8) qui alimente en courant l'outil (6) qui y est logé.

2. Broche selon la revendication 1, dans laquelle la tige de traction (7) est configurée comme arbre creux doté d'une cavité (9).

3. Broche selon la revendication 2, dans laquelle le conducteur de courant (8) est logé dans la cavité (9).

4. Broche selon l'une des revendications précédentes, dans laquelle la tige de traction (7) présente une première partie d'extrémité (10) qui est alimentée par un élément de transfert (11) en courant pour alimenter en courant le conducteur de courant (8).

5. Broche selon la revendication 4, dans laquelle la première partie d'extrémité (10) de la broche (1) et la tige de traction (7) peuvent coulisser axialement l'une par rapport à l'autre.

6. Broche selon l'une des revendications précédentes, dans laquelle la tige de traction (7) présente une deuxième partie d'extrémité (17) isolée par rapport à une partie de socle (25) de l'outil (6) qui y est logé.
